# EUROPÄISCHE PATENTSCHRIFT

(11) **EP 3 483 399 B1**
(45) Veröffentlichungstag und Bekanntmachung des Hinweises auf die Patenterteilung: **02.09.2020**
(21) Anmeldenummer: 17200845.0
(22) Anmeldetag: 09.11.2017
(51) Int. Cl.: F01D 11/00, F16J 15/44

(54) **DICHTUNGSANORDNUNG FÜR EINE STRÖMUNGSMASCHINE, VERFAHREN ZUR HERSTELLUNG EINER DICHTUNGSANORDNUNG SOWIE STRÖMUNGSMASCHINE**
SEAL ASSEMBLY FOR A TURBOMACHINE, METHOD FOR PRODUCING A SEAL ASSEMBLY AND TURBOMACHINE
DISPOSITIF D'ÉTANCHÉITÉ POUR UNE TURBOMACHINE, PROCÉDÉ DE FABRICATION D'UN DISPOSITIF D'ÉTANCHÉITÉ ET TURBOMACHINE

(43) Veröffentlichungstag der Anmeldung: 15.05.2019
(73) Patentinhaber: MTU Aero Engines AG, 80995 München (DE); Almecon Technologie GmbH, 59823 Arnsberg (DE)
(72) Erfinder: Schlemmer, Markus, 84048 Mainburg/Sandelzhausen (DE); Pirker, Klaus, 9073 Klagenfurt (AT); Kropp, Ralph, 85456 Wartenberg (DE); Vinke, Lorenz, 59823 Arnsberg (DE); Wiebe, Waldemar, 59823 Arnsberg (DE)
(74) Vertreter: Hofstetter, Schurack & Partner

(56) Entgegenhaltungen:
- EP-A1- 2 696 039
- EP-A1- 2 722 486
- EP-A2- 2 551 454
- WO-A1-2005/003519
- DE-A1- 3 911 571
- DE-C- 459 090
- GB-A- 2 121 885
- US-A- 2 963 307
- US-A1- 2007 286 719

## Beschreibung

Die Erfindung betrifft eine Dichtungsanordnung für eine Strömungsmaschine, insbesondere für ein Flugtriebwerk. Weitere Aspekte der Erfindung betreffen ein Verfahren zur Herstellung einer Dichtungsanordnung für eine Strömungsmaschine sowie eine Strömungsmaschine.

Bei der Herstellung von Strömungsmaschinen ist es bekannt Leitschaufelringe aus einer Mehrzahl von Leitschaufelsegmenten zusammenzusetzen. Derartige Leitschaufelringe dienen zur Ausrichtung eines beim Betrieb von Strömungsmaschinen durch diese strömenden Mediums (Arbeitsmediums). Mittels der Leitschaufelringe kann bei der Ausrichtung zumindest ein Teil der kinetischen Energie des strömenden Mediums in eine Drallenergie umgewandelt werden. Diese Drallenergie kann genutzt werden, um ein an den Leitschaufelring anschließendes Laufrad zu bewegen (anzutreiben) und dadurch eine mit dem Laufrad verbundene Antriebswelle der Strömungsmaschine in eine Rotationsbewegung zu versetzen. Um Strömungsmaschinen mit einem relativ großen Wirkungsgrad betreiben zu können, ist es sinnvoll, etwaige Spalte - beispielsweise zwischen dem Leitschaufelring und einem daran in einer radialer Erstreckungsrichtung angrenzenden Wellengehäuseteil, wie zum Beispiel einem Rotorgehäuse der Strömungsmaschine - möglichst klein zu halten. Dadurch kann eine ungewollte Fluidleckage des Mediums zumindest weitgehend unterbunden werden.

Aus der EP 2 551 454 A2 sind gattungsgemäße Dichtungsanordnungen für Strömungsmaschinen bekannt. Die Dichtungsanordnungen sind einerseits sehr massiv ausgebildet, da hier zwei Radialstege an einem Dichtungsträger zur Ausbildung einer Aufnahme für das Statorelement einstückig ausgebildet sind. Neben einem relativ hohen Gewicht sind diese bekannten Dichtungsanordnungen schwieriger zu fertigen, da Material im Zwischenraum zwischen den Radialstegen entfernt werden muss. Des Weiteren zeigt die EP 2 551 454 A2 eine Dichtungsanordnung bei der zwei L-förmige Stege voneinander beabstandet mit einem Axialsteg verbunden sind und den Dichtungsträger ausbilden. Der Zwischenraum zwischen den jeweiligen radial angeordneten Bereichen der Stege bildet die Aufnahme für das Statorelement. Die axial ausgerichteten Bereiche der Stege sind mit dem Axialsteg verbunden. Nachteilig an den bekannten Dichtungsanordnungen ist jedoch der hohe Materialverbrauch, das durch bedingte relative hohe Gewicht der Dichtungsanordnungen sowie der hohe Fertigungsaufwand und die daraus resultierenden hohen Kosten für die Herstellung der Dichtungsanordnungen. Vergleichbare Dichtungsanordnungen zeigen die US 2007/286719 A1 und die WO 2005/003519 A1.

Aufgabe der vorliegenden Erfindung ist es, eine Dichtungsanordnung für eine Strömungsmaschine, ein Verfahren zur Herstellung einer Dichtungsanordnung für eine Strömungsmaschine sowie eine Strömungsmaschine der eingangs genannten Art bereitzustellen, welche einfach und kostengünstig herstellbar sind und zudem ein im Vergleich zu bekannten Dichtungsanordnungen niedrigeres Gewicht aufweisen.

Diese Aufgaben werden durch eine Dichtungsanordnung mit den Merkmalen des Patentanspruchs 1, ein Verfahren mit den Merkmalen des Patentanspruchs 11 sowie durch eine Strömungsmaschine mit den Merkmalen des Patentanspruchs 15 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte und umgekehrt anzusehen sind.

Ein erster Aspekt der Erfindung betrifft eine Dichtungsanordnung für eine Strömungsmaschine, insbesondere für ein Flugtriebwerk, zur Abdichtung eines Radialspaltes zwischen einem Rotor und einem Stator, umfassend mindestens einen Dichtungsträger zur Halterung und/oder Befestigung von mindestens einem Dichtungselement, wobei der Dichtungsträger einen ersten und einen zweiten, sich in eine radiale Erstreckungsrichtung R erstreckenden Radialsteg sowie einen mit den Radialstegen stoffschlüssig verbundenen, in eine axiale Erstreckungsrichtung A sich erstreckenden Axialsteg umfasst und die Radialstege eine Aufnahme zur Aufnahme eines Elementes des Stators ausbilden. Dabei sind die Radialstege als in radialer Richtung länglich geformte und ebene Blechelemente ausgebildet, wobei jeweils ein radial innenliegendes, nicht gebogenes Ende der Radialstege auf Stoß mit einer radial außenliegenden Oberfläche des Axialstegs stoffschlüssig gefügt, insbesondere verschweißt, ist. Die erfindungsgemäße Dichtungsanordnung ist kostengünstig herzustellen, da der Dichtungsträger durch ausschließlich stoffschlüssige Fügeverfahren, wie zum Beispiel Schweißverfahren hergestellt werden kann. Im Gegensatz zu bekannten Herstellungsverfahren ist beispielsweise kein umfangreiches Heften zur Fixierung der Bauteile wie beispielsweise beim Beloten notwendig. Durch die Ausgestaltung der Radialstege als in radialer Richtung länglich geformte und ebene Blechelemente ergibt sich zudem eine Materialeinsparung, sodass die hergestellte Dichtungsanordnung insgesamt relativ leicht ausgebildet werden kann. Erfindungsgemäß können beispielsweise die im Stand der Technik üblicherweise verwendeten L-Winkel beziehungsweise L-förmigen Axialstege vermieden werden. Zudem besteht die Möglichkeit, dass auch der Axialsteg als Blechelement ausgebildet ist. Durch das stoffschlüssige Fügen, insbesondere Verschweißen, von zwei Blechteilen, nämlich dem jeweiligen Radialsteg mit dem Axialsteg wird ein minimaler Materialeinsatz bei einer günstigen Füge- oder Schweißoperation verwirklicht. Dabei werden die Blechelemente entsprechend der geometrischen Anforderungen miteinander stoffschlüssig gefügt beziehungsweise verschweißt, sodass auf einen Lötprozess oder eine Drehoperation verzichtet werden kann. Die erfindungsgemäße Dichtungsanordnung kann daher relativ leicht und kostengünstig hergestellt werden. Das verschweißen kann dabei mittels eines Laserschweißverfahrens erfolgen. Die Radialstege sind jeweils auf Stoß mit der radial außenliegenden Oberfläche des Axialstegs stoffschlüssig gefügt, insbesondere verschweißt. Dies bedeutet, dass die gefügten beziehungsweise geschweißten Enden der Radialstege nicht umgebogen sind, um flächig beziehungsweise "Fläche-an-Fläche" mit dem Axialsteg verbunden zu werden. Überraschenderweise hat sich herausgestellt, dass eine derartige stoffschlüssige Verbindung beziehungsweise Verschweißung auf Stoß, die einen vergleichsweise einfachen Aufbau und eine unkomplizierte Fertigung gewährleistet, den hohen Stabilitätsanforderungen an das Bauteil genügt.

In einer weiteren vorteilhaften Ausgestaltung der erfindungsgemäßen Dichtungsanordnung ist an einem radial äußeren Ende von zumindest einem der Radialstege ein sich axial erstreckender Außenflansch ausgebildet. Dabei wirkt der Außenflansch beispielsweise mit einem entsprechend ausgebildeten Bauteil einer benachbarten Laufschaufelreihe zusammen, um ein direktes radiales Ausströmen des Strömungsmediums, insbesondere des Heißgases aus dem Strömungskanal in die radial innere Gehäusestruktur zu verhindern.

In einer weiteren vorteilhaften Ausgestaltung der erfindungsgemäßen Dichtungsanordnung ist der Dichtungsträger T-förmig ausgebildet, derart, dass sich der Axialsteg in axialer Richtung beiderseits über einen Verbindungsbereich zwischen dem Radialsteg und dem Axialsteg hinaus erstreckt. Durch diese Ausgestaltung des Dichtungsträgers wird vorteilhafterweise eine relativ große, radial innenliegende Anlagefläche des Axialstegs zur Halterung und/oder Befestigung des mindestens einen Dichtungselements bereitgestellt. Das Dichtungselement ist üblicherweise als Wabendichtung ausgebildet. Es besteht aber auch die Möglichkeit, dass bürstenartige Dichtungselemente an dem Axialsteg des Dichtungsträgers befestigt werden.

In einer weiteren vorteilhaften Ausgestaltung der erfindungsgemäßen Dichtungsanordnung umfasst die Dichtungsanordnung einen in Strömungsrichtung S betrachtet vorderen Ring oder ein vorderes Ringsegment und/oder einen hinteren Ring oder ein hinteres Ringsegment, wobei der vordere Ring oder das vordere Ringsegment mit dem ersten Radialsteg und der hintere oder das hintere Ringsegment mit dem zweiten Radialsteg kraft- und/oder stoffschlüssig verbunden ist. Der vordere und/oder hintere Ring beziehungsweise die vorderen und/oder hinteren Ringsegmente wirken dabei beispielsweise mit entsprechenden Bauteilen einer benachbarten Laufschaufelreihe zusammen, um wiederum ein direktes radiales Ausströmen des Strömungsmediums, insbesondere des Heißgases aus dem Strömungskanal in die radial innere Gehäusestruktur der Strömungsmaschine zu verhindern.

Dabei können der vordere Ring oder das vordere Ringsegment und/oder der hintere Ring und/oder das hintere Ringsegment als Blechelemente ausgebildet sein. Dadurch können der vordere Ring beziehungsweise das vordere Ringsegment und/oder der hintere Ring beziehungsweise das hintere Ringsegment sehr einfach und insbesondere als leichtes Bauelement hergestellt werden. Insgesamt ergibt sich wiederum eine deutliche Gewichtsreduktion der erfindungsgemäßen Dichtungsanordnung gegenüber den im Stand der Technik bekannten Dichtungsanordnungen. Die Herstellung der Ringe beziehungsweise Ringsegmente kann dabei mittels Walzen erfolgen. Üblicherweise sind die Ringe beziehungsweise Ringsegmente einstückig ausgebildet. Es besteht aber auch die Möglichkeit, die einzelnen Elemente des vorderen oder hinteren Rings beziehungsweise Ringsegments aus Einzelteilen zu fertigen und diese beispielsweise miteinander zu verlöten oder zu verschweißen. Des Weiteren besteht die Möglichkeit, die genannten Ringe beziehungsweise Ringsegmente beispielsweise aus einem Nickel-Basiswerkstoff herzustellen, insbesondere mittels eines spanenden Verfahrens oder auch eines additiven Fertigungsverfahrens.

In weiteren vorteilhaften Ausgestaltungen der erfindungsgemäßen Dichtungsanordnung ist das Element des Stators ein Schaufelfuß oder ein Schaufelfußsegment eines Leitschaufelrings, eines Leitschaufelringsegments oder einer Leitschaufel der Strömungsmaschine. Die Dichtungsanordnung kann in diesem Fall als so genannter SIAS (Static Inner Air Seal)-Ring oder SIAS-Ringsegment ausgebildet sein.

Zudem kann mindestens ein Gleitstein zwischen den Radialstegen angeordnet und mittels mindestens jeweils einem Axialbolzen mit diesen verbunden sein. Der Gleitstein kann dabei aus Metall, einer Metalllegierung, Keramik oder anderen geeigneten Materialien, insbesondere hochtemperaturfesten Materialien, bestehen.

Ein zweiter Aspekt der Erfindung betrifft ein Verfahren zur Herstellung einer Dichtungsanordnung für eine Strömungsmaschine gemäß dem ersten Erfindungsaspekt umfassend zumindest die folgenden Verfahrensschritte: Herstellen eines ersten und eines zweiten Radialstegs derart, dass sie als länglich geformte und ebene Blechelemente ausgebildet sind, Herstellen eines Axialstegs und stoffschlüssiges Fügen, insbesondere Verschweißen, jeweils eines radial innenliegenden, nicht gebogenen Endes der Radialstege auf Stoß mit einer radial außenliegenden Oberfläche des Axialstegs. Der Axialsteg kann dabei ebenfalls als Blechelement ausgebildet sein. Da die Verbindung der Radialstege mit dem Axialsteg durch reine stoffschlüssige Fügeverfahren, insbesondere Schweißoperationen erfolgt, ist das Herstellungsverfahren insgesamt kostengünstig durchzuführen. Zudem ergibt sich durch das stoffschlüssige Fügen, insbesondere Verschweißen, von den jeweils als ebene Blechelemente ausgebildeten Radialstegen mit dem Axialsteg ein minimaler Materialeinsatz. Dabei werden die Blechelemente entsprechend der geometrischen Anforderungen miteinander verschweißt. Insgesamt ergibt sich ein im Vergleich zu bekannten Dichtungsanordnungen relativ leichtes Bauelement, welches zudem die geforderten Qualitätsanforderungen erfüllt. Die Radialstege sind auf Stoß mit der radial außenliegenden Oberfläche des Axialstegs stoffschlüssig gefügt, insbesondere verschweißt. Auch Klebe- und Lötverfahren oder eine Kombination dieser Verfahren oder mit Schweißverfahren sind zur Durchführung des stoffschlüssigen Fügens denkbar.

In weiteren vorteilhaften Ausgestaltungen des erfindungsgemäßen Verfahrens erfolgt das Verschweißen mittels Laser und/oder das Verschweißen wird in einer Richtung vorgenommen, die zur Radial- und Axialrichtung der Strömungsmaschine beziehungsweise des Dichtungsträgers in einem Winkel zwischen 30° und 60°, vorzugsweise 45°, geneigt ist.

Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Ein dritter Aspekt der Erfindung betrifft eine Strömungsmaschine, insbesondere ein Flugtriebwerk, mit mindestens einer Dichtungsanordnung gemäß dem ersten Erfindungsaspekts und/oder mit mindestens einer Dichtungsanordnung hergestellt mittels einem Verfahren gemäß dem zweiten Erfindungsaspekt. Die Merkmale und deren Vorteile des dritten Erfindungsaspekts sind den Beschreibungen des ersten und zweiten Erfindungsaspekts zu entnehmen, wobei vorteilhafte Ausgestaltungen des ersten und zweiten Erfindungsaspekts als vorteilhafte Ausgestaltungen des dritten Erfindungsaspekts und umgekehrt anzusehen sind. Insbesondere kann der Wirkungsgrad der erfindungsgemäßen Strömungsmaschine deutlich erhöht werden. Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Schnittdarstellung der erfindungsgemäßen Dichtungsanordnung gemäß einer ersten Ausführungsform;
- Fig. 2: eine schematische Perspektivdarstellung der erfindungsgemäßen Dichtungsanordnung gemäß Figur 1;
- Fig. 3: eine weitere schematische Perspektivdarstellung der erfindungsgemäßen Dichtungsanordnung gemäß Figur 1;
- Fig. 4: eine schematische Schnittdarstellung der erfindungsgemäßen Dichtungsanordnung gemäß einer zweiten Ausführungsform; und
- Fig. 5: eine schematische Schnittdarstellung der erfindungsgemäßen Dichtungsanordnung gemäß einer dritten Ausführungsform.

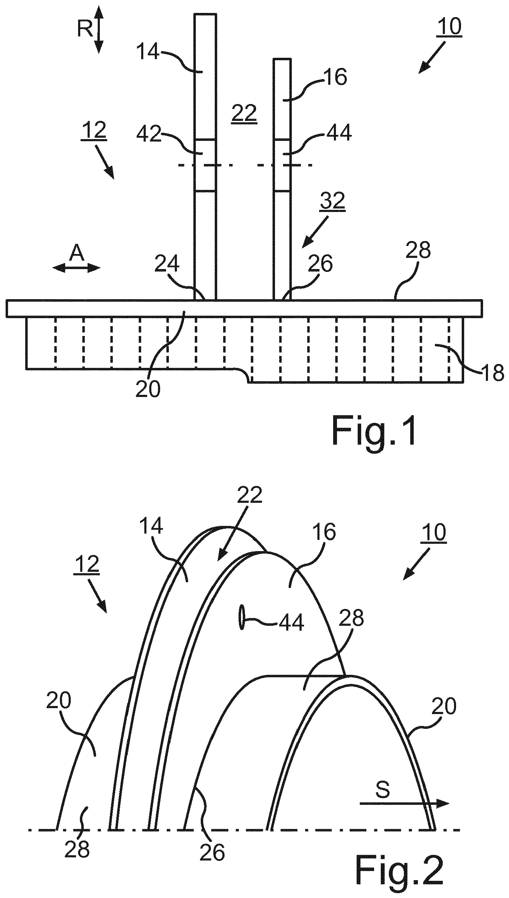

**Fig. 1** zeigt eine schematische Schnittdarstellung einer Dichtungsanordnung 10 für eine Strömungsmaschine, insbesondere für ein Flugtriebwerk, gemäß einer ersten Ausführungsform. Die Dichtungsanordnung 10 dient dabei zur Abdichtung eines Radialspaltes zwischen einem Rotor und einem Stator der Strömungsmaschine. In den dargestellten Ausführungsbeispielen handelt es sich bei dem Stator jeweils um einen Leitschaufelring einer Gasturbine.

Die Dichtungsanordnung 10 weist einen Dichtungsträger 12 zur Halterung und/oder Befestigung eines Dichtungselements 18 auf, wobei der Dichtungsträger 12 einen ersten und einen zweiten, sich in eine radiale Erstreckungsrichtung R ersteckenden Radialsteg 14, 16 sowie einen mit den Radialstegen 14, 16 stoffschlüssig verbundenen, in eine axiale Erstreckungsrichtung A sich erstreckenden Axialsteg 20 umfasst und die Radialstege 14, 16 eine Aufnahme 22 zur Aufnahme eines Elementes des Stators ausbilden. Die Angaben "radial" und "axial" können auch Richtungen umfassen, die von einer idealen axialen oder radialen Erstreckungsrichtung abweichen. Abweichungen von der idealen axialen oder radialen Erstreckungsrichtung in einem Winkelbereich zwischen +15° und -15° sind denkbar. In dem dargestellten Ausführungsbeispiel dient die Aufnahme 22 zur Aufnahme, Halterung und Befestigung eines Schaufelfußes beziehungsweise Schaufelfußsegments eines Leitschaufelringsegments. Grundsätzlich kann das aufzunehmende Statorelement ein Gehäuseabschnitt der Strömungsmaschine, ein Abschnitt einer Leitschaufel, ein Abschnitt eines Schaufelträgers und dergleichen sein. Beispielsweise kann die Dichtungsanordnung 10 im Bereich einer Niederdruckturbine eines Flugtriebwerks angeordnet sein.

Des Weiteren erkennt man, dass das Dichtungselement 18 an einer radial innenliegenden Anlagefläche beziehungsweise Oberfläche des Axialstegs 20 angeordnet ist. Unter "Anordnen" des Dichtungselements 18 an dem Axialsteg 16 wird eine stoff- und/oder formschlüssige, lösbare oder nicht-lösbare Verbindung verstanden. In dem dargestellten Ausführungsbeispiel handelt es sich bei dem Dichtungselement 18 um eine Wabendichtung. Die Wabendichtung 18 kann aus üblichen Materialien, insbesondere aus Metall, einer Metalllegierung, Keramik oder auch Kombinationen dieser Materialien bestehen.

Des Weiteren erkannt man, dass die Radialstege 14, 16 als in radialer Richtung länglich geformte und ebene Blechelemente ausgebildet sind, die jeweils ein radial innenliegendes Ende 24, 26 aufweisen und mit diesen Enden 24, 26 mit einer radial außenliegenden Oberfläche 28 des Axialstegs 20 verschweißt sind. Dabei ist der Axialsteg 20 ebenfalls als Blechelement ausgebildet. Des Weiteren wird aus Fig. 1 deutlich, dass der Dichtungsträger 12 T-förmig ausgebildet ist, derart, dass sich der Axialsteg 20 in axialer Richtung A beiderseits über einen Verbindungsbereich 32 zwischen den Radialstegen 14, 16 und dem Axialsteg 20 hinaus erstreckt. Dadurch wird eine flächenmäßig große Anlagefläche zur Anordnung des Dichtungselementes 18 bereitgestellt.

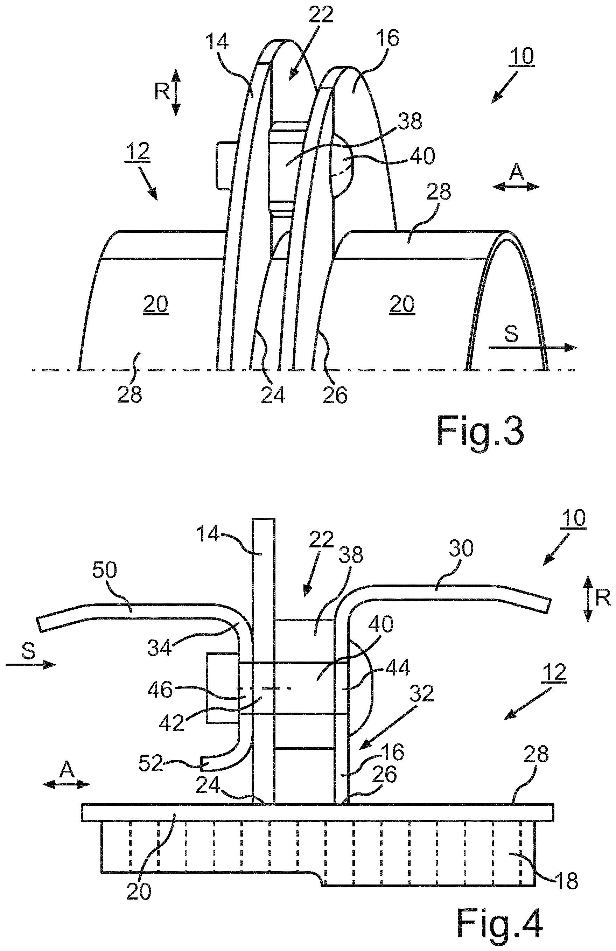

Die Radialstege 14, 16 weisen zudem zueinander ausgerichtete Öffnungen 42, 44 zur Aufnahme eines Axialbolzens 40 (siehe Fig. 3) auf.

**Fig. 2** zeigt eine schematische Perspektivdarstellung der Dichtungsanordnung 10 gemäß Fig. 1. Man erkennt die ringförmige Ausgestaltung des Dichtungsträgers 12. Man erkennt wiederum, dass die Radialstege 14, 16 die Aufnahme 22 zur Aufnahme des Elementes des Stators ausbilden. Die radial innenliegenden Enden 24, 26 der Radialstege 14, 16 sind mit der radial außenliegenden Oberfläche 28 des Axialstegs 20 verschweißt. Durch den stoffschlüssigen Verbund der Radialstege 14, 16 mit dem Axialsteg 20 wird die Aufnahme 22 dichtend abgeschlossen. Unter "S" wird die Strömungsrichtung der Strömungsmaschine angedeutet.

**Fig. 3** zeigt eine weitere schematische Perspektivdarstellung der Dichtungsanordnung 10 gemäß Fig. 1. Man erkennt die Anordnung eines Gleitsteins 38 zwischen den Radialstegen 14, 16. Der Gleitstein 38 ist dabei mittels des Axialbolzens 40 mit diesen verbunden. Bezüglich der weiteren in der Fig. 3 dargestellten Elemente verweisen wir auf die Beschreibung dieser Elemente in den Figuren 1 und 2, wobei identische Elemente gleiche Bezugszeichen aufweisen.

**Fig. 4** zeigt eine schematische Schnittdarstellung einer Dichtungsanordnung 10 gemäß einer zweiten Ausführungsform. Man erkennt, dass im Gegensatz zu dem in den Figuren 1 bis 3 dargestellten Ausführungsbeispiel die vorliegende Ausführungsform der Dichtungsanordnung 10 einen radial verlaufenden zweiten Radialsteg 16 aufweist, bei dem an einem radial äußeren Ende ein sich axial erstreckender Außenflansch 30 ausgebildet ist. Des Weiteren ist an dem ersten Radialsteg 14 ein mittels des Axialbolzens 40 befestigter vorderer Ring beziehungsweise vorderes Ringsegment 34 angeordnet. Der vordere Ring beziehungsweise das vordere Ringsegment 34 ist dabei in Strömungsrichtung S betrachtet vor dem ersten Radialsteg 14 angeordnet. Man erkennt, dass der vordere Ring beziehungsweise das vordere Ringsegment 34 einen radial verlaufenden Steg, mit dem der vordere Ring beziehungsweise das vordere Ringsegment 34 an dem ersten Radialsteg 14 anliegt und jeweils einen radial innenliegenden, sich axial erstreckenden Innenflansch 52 und einen radial außenliegenden, sich axial erstreckenden Außenflansch 50, aufweist. Der Außenflansch 50 und der Innenflansch 52 sind dabei einstückig mit dem radial verlaufenden Steg des vorderen Rings beziehungsweise vorderen Ringsegments 34 ausgebildet. Zur Durchführung des Axialbolzens 40 ist in dem radial verlaufenden Abschnitt des vorderen Rings beziehungsweise vorderen Ringsegments 34 eine mit den Öffnungen 42, 44 des ersten und zweiten Radialstegs 14, 16 fluchtende Öffnung 46 ausgebildet.

Des Weiteren erkennt man, dass die Radialstege 14, 16 wiederum als in radialer Richtung länglich geformte Blechelemente ausgebildet sind, wobei jeweils die radial innenliegenden Enden 24, 26 der Radialstege 14, 16 mit der radial außenliegenden Oberfläche 28 des Axialstegs 20 verschweißt sind. Der Axialsteg 20 dient wiederum zur Anordnung des Dichtungselements 18. Die beiden Radialstege 14, 16 bilden mit dem Axialsteg 20 einen T-förmigen Dichtungsträger 12 aus.

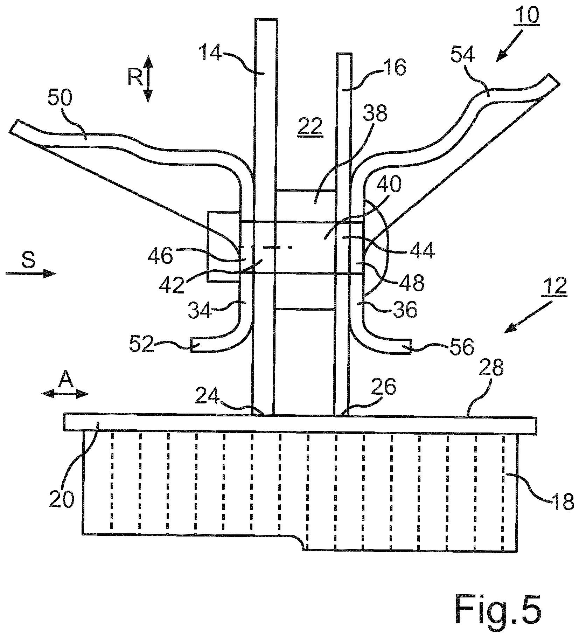

**Fig. 5** zeigt eine schematische Schnittdarstellung einer Dichtungsanordnung 10 gemäß einer dritten Ausführungsform. Im Unterschied zu der in den Figuren 1 bis 3 dargestellten Ausführungsform der Dichtungsanordnung weist die in Fig. 5 dargestellte Dichtungsanordnung jeweils einen in Strömungsrichtung S betrachteten vorderen Ring oder ein vorderes Ringsegment 34 und einen hinteren Ring beziehungsweise ein hinteres Ringsegment 36 auf. Der vordere Ring beziehungsweise das vordere Ringsegment 34 ist dabei mit dem ersten Radialsteg 14 und der hintere Ring beziehungsweise das hintere Ringsegment 36 mit dem zweiten Radialsteg 16 kraftschlüssig über den Axialbolzen 40 miteinander verbunden. Um dies zu gewährleisten, weist ein radial ausgerichteter Abschnitt des hinteren Rings beziehungsweise des hinteren Ringsegmentes 36 eine mit den Öffnungen 42, 44 des ersten und zweiten Radialsteges 14, 16 fluchtende Öffnung 48 auf. Entsprechendes gilt für den vorderen Ring beziehungsweise das vordere Ringsegment 34 mit bereits in Fig. 4 beschriebenen Öffnung 46. Der hintere Ring beziehungsweise das hintere Ringsegment 36 weist wiederum einen Außenflansch 54 sowie einen Innenflansch 56 auf, wobei sich sowohl der Außenflansch 54 wie auch der Innenflansch 56 in ungefähr axialer Richtung erstrecken. Über den radial verlaufenden Teilbereich des hinteren Rings beziehungsweise des hinteren Ringsegments 36 sind der Außenflansch 54 sowie der Innenflansch 56 einstückig verbunden.

Des Weiteren erkennt man, dass über den Axialbolzen 40 wiederum ein Gleitstein 38 zwischen dem ersten und dem zweiten Radialsteg 14, 16 angeordnet ist. Über die Enden 24, 26 sind die Radialstege 14, 16 mit der radial innenliegenden Oberfläche 28 des Axialstegs 20 verschweißt und bilden die Aufnahme 22 zur Aufnahme eines Elementes des Stators aus. An der radial innenliegenden Oberfläche des Axialstegs 20 ist wiederum das Dichtungselement 18 angeordnet. In dem dargestellten Ausführungsbeispiel ist das Dichtungselement 18 eine Wabendichtung. Bezüglich der weiteren Merkmale der in Fig. 5 dargestellten Elemente verweisen wir auf die Beschreibungen der Figuren 1 bis 4, wobei identische Elemente gleiche Bezugszeichen aufweisen. Des Weiteren wird deutlich, dass die in den vorhergehenden Ausführungsbeispielen dargestellten vorderen Ringe beziehungsweise vorderen Ringsegmente wie auch die hinteren Ringe beziehungsweise die hinteren Ringsegmente im Querschnitt C-förmig ausgebildet sind. Die jeweiligen Außenflansche dienen dabei zur Stabilisierung der Ringe 34, 36 sowie zur zumindest teilweisen Abdichtung dieses Bereichs der Gehäusestruktur der Strömungsmaschine gegenüber dem Arbeitsmedium der Strömungsmaschine.

### Bezugszeichenliste:

- 10: Dichtungsanordnung
- 12: Dichtungsträger
- 14: Radialsteg
- 16: Radialsteg
- 18: Dichtungselement
- 20: Axialsteg
- 22: Aufnahme
- 24: Radial innenliegendes Ende
- 26: Radial innenliegendes Ende
- 28: Oberfläche
- 30: Außenflansch
- 32: Verbindungsbereich
- 34: Vorderer Ring, vorderes Ringsegment
- 36: Hinterer Ring, hinteres Ringsegment
- 38: Gleitstein
- 40: Axialbolzen
- 42: Öffnung
- 44: Öffnung
- 46: Öffnung
- 48: Öffnung
- 50: Außenflansch
- 52: Innenflansch
- 54: Außenflansch
- 56: Innenflansch
- R: Radiale Erstreckungsrichtung
- A: Axiale Erstreckungsrichtung
- S: Strömungsrichtung

## Patentansprüche

1. Dichtungsanordnung (10) für eine Strömungsmaschine zur Abdichtung eines Radialspaltes zwischen einem Rotor und einem Stator, umfassend mindestens einen Dichtungsträger (12) zur Halterung und/oder Befestigung von mindestens einem Dichtungselement (18), wobei der Dichtungsträger (12) einen ersten und einen zweiten, sich in eine radiale Erstreckungsrichtung (R) ersteckenden Radialsteg (14, 16) sowie einen mit den Radialstegen (14, 16) stoffschlüssig verbundenen, in eine axiale Erstreckungsrichtung (A) sich erstreckenden Axialsteg (20) umfasst und die Radialstege (14, 16) eine Aufnahme (22) zur Aufnahme eines Elementes des Stators ausbilden, wobei die Radialstege (14, 16) als in radialer Richtung länglich geformte und ebene Blechelemente ausgebildet sind, wobei jeweils ein radial innenliegendes, nicht gebogenes Ende (24, 26) der Radialstege (14, 16) auf Stoß mit einer radial außenliegenden Oberfläche (28) des Axialstegs (20) stoffschlüssig gefügt ist.

2. Dichtungsanordnung (10) nach Anspruch 1,
**dadurch gekennzeichnet, dass**
die Radialstege (14, 16) mit der radial außenliegenden Oberfläche (28) des Axialstegs (20) verschweißt sind.

3. Dichtungsanordnung (10) nach Anspruch 1 oder 2,
**dadurch gekennzeichnet, dass**
der Axialsteg (20) als Blechelement ausgebildet ist.

4. Dichtungsanordnung (10) nach einem der vorhergehenden Ansprüche,
**dadurch gekennzeichnet, dass**
der Dichtungsträger (12) T-förmig ausgebildet ist, derart, dass sich der Axialsteg (20) in axialer Richtung (A) beiderseits über einen Verbindungsbereich (32) zwischen den Radialstegen (14, 16) und dem Axialsteg (20) hinaus erstreckt.

5. Dichtungsanordnung (10) nach einem der vorhergehenden Ansprüche,
**dadurch gekennzeichnet, dass**
an einem radial äußeren Ende von zumindest einem der radial verlaufenden Radialstege (14, 16) ein sich axial erstreckender Außenflansch (30) ausgebildet ist.

6. Dichtungsanordnung (10) nach einem der Ansprüche 1 bis 4,
**dadurch gekennzeichnet, dass**
die Dichtungsanordnung (10) einen in Strömungsrichtung (S) betrachtet vorderen Ring oder ein vorderes Ringsegment (34) und/oder einen hinteren Ring oder ein hinteres Ringsegment (36) umfasst, wobei der vordere Ring oder das vordere Ringsegment (34) mit dem ersten Radialsteg (14) und der hintere Ring oder das hintere Ringsegment (36) mit dem zweiten Radialsteg (16) kraft- und/oder stoffschlüssig verbunden ist.

7. Dichtungsanordnung (10) nach Anspruch 6,
**dadurch gekennzeichnet, dass**
der vordere Ring oder das vordere Ringsegment (34) und/oder der hintere Ring oder das hintere Ringsegment (36) als Blechelemente ausgebildet sind.

8. Dichtungsanordnung (10) nach einem der vorhergehenden Ansprüche,
**dadurch gekennzeichnet, dass**
das Element des Stators ein Schaufelfuß oder ein Schaufelfußsegment eines Leitschaufelrings, eines Leitschaufelringsegmentes oder einer Leitschaufel der Strömungsmaschine ist.

9. Dichtungsanordnung (10) nach einem der vorhergehenden Ansprüche,
**dadurch gekennzeichnet, dass**
das Dichtungselement (18) als Waben- oder Bürstendichtung ausgebildet ist.

10. Dichtungsanordnung (10) nach einem der vorhergehenden Ansprüche,
**dadurch gekennzeichnet, dass**
die Dichtungsanordnung (10) ein SIAS (Static Inner Air Seal)-Ring oder ein Ringsegment davon ist.

11. Verfahren zur Herstellung einer Dichtungsanordnung (10) für eine Strömungsmaschine gemäß einem der Ansprüche 1 bis 10 umfassend zumindest die folgenden Verfahrensschritte zur Herstellung des Dichtungsträgers (12) der Dichtungsanordnung (10):
- Herstellen eines ersten und zweiten Radialstegs (14, 16) derart, dass sie als länglich geformte und ebene Blechelemente ausgebildet sind;
- Herstellen eines Axialstegs (20); und
- Stoffschlüssiges Fügen jeweils eines radial innenliegenden, nicht gebogenen Endes (24, 26) der Radialstege (14, 16) auf Stoß mit einer radial außenliegenden Oberfläche (28) des Axialstegs (20).

12. Verfahren nach Anspruch 11,
**dadurch gekennzeichnet, dass**
das stoffschlüssige Fügen ein Verschweißen ist.

13. Verfahren nach Anspruch 12,
**dadurch gekennzeichnet, dass**
das Verschweißen mittels Laser erfolgt.

14. Verfahren nach Anspruch 12 oder 13,
**dadurch gekennzeichnet, dass**
das Verschweißen in einer Richtung vorgenommen wird, die zur Radial- und Axialrichtung der Strömungsmaschine beziehungsweise des Dichtungsträgers in einem Winkel zwischen 30° und 60° geneigt ist.

15. Strömungsmaschine, insbesondere Flugtriebwerk, mit mindestens einer Dichtungsanordnung (10) gemäß einem der Ansprüche 1 bis 10 und/oder mit mindestens einer Dichtungsanordnung (10) hergestellt mittels einem Verfahren gemäß einem der Ansprüche 11 bis 14.

## Claims

1. Sealing assembly (10) for a fluid kinetic machine for sealing a radial gap between a rotor and a stator, including at least one sealing support (12) for retaining and/or fixing at least one sealing element (18), wherein the sealing support (12) includes a first and a second radial web (14, 16) extending in a radial extension direction (R) as well as an axial web (20) extending in an axial extension direction (A), firmly bonded to the radial webs (14, 16), and the radial webs (14, 16) form a receptacle (22) for receiving an element of the stator, wherein the radial webs (14, 16) are formed as flat sheet elements formed elongated in radial direction, wherein a radially interior, non-bent end (24, 26) of the radial webs (14, 16) is respectively firmly bonded to a radially exterior surface (28) of the axial web (20) edge to edge.

2. Sealing assembly (10) according to claim 1,
**characterized in that**
the radial webs (14, 16) are welded to the radially exterior surface (28) of the axial web (20).

3. Sealing assembly (10) according to claim 1 or 2,
**characterized in that**
the axial web (20) is formed as a sheet element.

4. Sealing assembly (10) according to any one of the preceding claims,
**characterized in that**
the sealing support (12) is T-shaped formed such that the axial web (20) extends beyond a connection area (32) between the radial webs (14, 16) and the axial web (20) on both sides in axial direction (A).

5. Sealing assembly (10) according to any one of the preceding claims,
**characterized in that**
an axially extending outer flange (30) is formed at a radially outer end of at least one of the radially extending radial webs (14, 16).

6. Sealing assembly (10) according to any one of claims 1 to 4,
**characterized in that**
the sealing assembly (10) includes a front ring or a front ring segment (34) and/or a rear ring and/or a rear ring segment (36) viewed in flow direction (S), wherein the front ring or the front ring segment (34) is connected to the first radial web (14) and the rear ring or the rear ring segment (36) is connected to the second radial web (16) in force-fit and/or firmly bonded manner.

7. Sealing assembly (10) according to claim 6,
**characterized in that**
the front ring or the front ring segment (34) and/or the rear ring or the rear ring segment (36) are formed as sheet elements.

8. Sealing assembly (10) according to any one of the preceding claims,
**characterized in that**
the element of the stator is a blade foot or a blade foot segment of a guide blade ring, a guide blade ring segment or a guide blade of the fluid kinetic machine.

9. Sealing assembly (10) according to any one of the preceding claims,
**characterized in that**
the sealing element (18) is formed as a honeycomb or brush seal.

10. Sealing assembly (10) according to any one of the preceding claims,
**characterized in that**
the sealing assembly (10) is a SIAS (static inner air seal) ring or a ring segment thereof.

11. Method for producing a sealing assembly (10) for a fluid kinetic machine according to any one of claims 1 to 10 including at least the following method steps for producing the sealing support (12) of the seal assembly (10):
- producing a first and a second radial web (14, 16) such that they are formed as elongated formed and flat sheet elements;
- producing an axial web (20); and
- firmly bonding respectively a radially interior, non-bent end (24, 26) of the radial webs (14, 16) to a radially exterior surface (28) of the axial web (20) edge to edge.

12. Method according to claim 11,
**characterized in that**
firmly bonding is welding.

13. Method according to claim 12,
**characterized in that**
welding is effected by means of laser.

14. Method according to claim 12 or 13,
**characterized in that**
welding is performed in a direction, which is inclined to the radial and axial direction of the fluid kinetic machine and the sealing support, respectively, at an angle between 30° and 60°.

15. Fluid kinetic machine, in particular aircraft engine, with at least one sealing assembly (10) according to any one of claims 1 to 10, and/or with at least one sealing assembly (10) produced by means of a method according to any one of claims 11 to 14.

## Revendications

1. Dispositif d'étanchéité (10) pour une turbomachine pour étancher une fente radiale entre un rotor et un stator comportant au moins un support d'étanchéité (12) pour le maintien et/ou la fixation d'au moins un élément d'étanchéité (18), dans lequel le support d'étanchéité (12) comporte une première et une seconde entretoise radiale (14, 16) s'étendant dans une direction radiale d'extension (R) ainsi qu'une entretoise axiale (20) liée avec les entretoises radiales (14, 16) par une liaison par la matière et s'étendant dans une direction axiale d'extension (A), et les entretoises radiales (14, 16) forment une réception (22) pour recevoir un élément du stator, dans lesquels les entretoises radiales (14, 16) sont formées comme éléments en tôle plans de forme allongée dans la direction radiale, dans lesquels une extrémité respective radialement à l'intérieur et non courbée (24, 26) des entretoises radiales (14, 16) est jointée bout à bout avec une liaison par la matière avec une surface (28) radialement à l'extérieur de l'entretoise axiale (20).

2. Dispositif d'étanchéité (10) selon la revendication 1,
**caractérisé en ce que**
les entretoises radiales (14, 16) sont soudées avec la surface (28) radialement à l'extérieur de l'entretoise axiale (20).

3. Dispositif d'étanchéité (10) selon la revendication 1 ou 2,
**caractérisé en ce que**
l'entretoise axiale (20) est formée comme élément en tôle.

4. Dispositif d'étanchéité (10) selon l'une quelconque des revendications précédentes,
**caractérisé en ce que**
le support d'étanchéité (12) est en forme de T de sorte que l'entretoise axiale (20) s'étend dans la direction axiale (A) des deux côtés à travers et au-delà une zone de liaison (32) entre les entretoises radiales (14, 16) et l'entretoise axiale (20).

5. Dispositif d'étanchéité (10) selon l'une quelconque des revendications précédentes,
**caractérisé en ce que**
à une extrémité radialement extérieure de d'au moins une des entretoises radiales s'étendant radialement (14, 16) une bride extérieure (30) s'étendant axialement est formée.

6. Dispositif d'étanchéité (10) selon l'une quelconque des revendications 1 à 4, **caractérisé en ce que**
le dispositif d'étanchéité (10) comporte - vu dans la direction du fluide (S) - un anneau frontal ou un segment d'anneau frontal (34) et/ou un anneau arrière ou un segment d'anneau arrière (36), dans lequel l'anneau frontal ou le segment d'anneau frontal (34) est lié par friction et/ou par la matière avec la première entretoise radiale (14) et l'anneau arrière ou le segment d'anneau arrière (36) est lié par friction et/ou par la matière avec la seconde entretoise radiale (16).

7. Dispositif d'étanchéité (10) selon la revendication 6,
**caractérisé en ce que**
l'anneau frontal ou le segment d'anneau frontal (34) et/ou l'anneau arrière ou le segment d'anneau arrière (36) sont formés comme éléments en tôle.

8. Dispositif d'étanchéité (10) selon l'une quelconque des revendications précédentes,
**caractérisé en ce que**
l'élément du stator est un pied d'aube ou un segment de pied d'aube d'un anneau d'aube de guidage, d'un segment de l'anneau d'aube de guidage ou d'une aube de guidage de la turbomachine.

9. Dispositif d'étanchéité (10) selon l'une quelconque des revendications précédentes,
**caractérisé en ce que**
l'élément d'étanchéité (18) est formé comme joint en nid d'abeilles ou à brosse.

10. Dispositif d'étanchéité (10) selon l'une quelconque des revendications précédentes,
**caractérisé en ce que**
le dispositif d'étanchéité (10) est un anneau SIAS (Static Inner Air Seal) ou un segment d'anneau de celui-ci.

11. Procédé de fabrication d'un dispositif d'étanchéité (10) pour une turbomachine selon l'une quelconque des revendications 1 à 10, comportant au moins les étapes suivantes pour fabriquer le support d'étanchéité (12) du dispositif d'étanchéité (10):
- fabrication d'une première et seconde entretoise radiale (14, 16) de sorte qu'elles sont formées comme éléments en tôle plans de forme allongée;
- fabrication d'une entretoise axiale (20); et
- jointage bout à bout respectif par une liaison par la matière d'une extrémité radialement à l'intérieur et non courbée (24, 26) des entretoises radiales (14, 16) avec une surface (28) radialement à l'extérieur de l'entretoise axiale (20).

12. Procédé selon la revendication 11,
**caractérisé en ce que**
le jointage par une liaison par la matière est un soudage.

13. Procédé selon la revendication 12,
**caractérisé en ce que**
le soudage est effectué par laser.

14. Procédé selon la revendication 12 ou 13,
**caractérisé en ce que**
le soudage est effectué dans une direction qui est inclinée par rapport à la direction radiale et la direction axiale de la turbomachine et/ou du support d'étanchéité d'un angle compris entre 30 ° et 60 °.

15. Turbomachine, surtout groupe motopropulseur d'un avion, avec au moins un dispositif d'étanchéité (10) selon l'une quelconque des revendications 1 à 10 et/ou avec au moins un dispositif d'étanchéité (10) fabriqué au moyen d'un procédé selon l'une quelconque des revendications 11 à 14.
